(19) Europäisches Patentamt

European Patent Office

Office européen des brevets

(11) **EP 1 662 230 A1**

(12) **EUROPEAN PATENT APPLICATION**
published in accordance with Art. 158(3) EPC

(43) Date of publication:
**31.05.2006 Bulletin 2006/22**

(51) Int Cl.:
*G01C 21/26* (2000.01)      *H04Q 7/34* (1995.01)
*G08G 1/0969* (1990.01)      *H04B 7/26* (1974.07)

(21) Application number: **03818550.0**

(22) Date of filing: **02.09.2003**

(86) International application number:
**PCT/JP2003/011130**

(87) International publication number:
**WO 2005/024346 (17.03.2005 Gazette 2005/11)**

(84) Designated Contracting States:
**FR**

(71) Applicants:
• **Hitachi, Ltd.**
**Tokyo 100-8280 (JP)**
• **Nakahara, Takashi**
**Ibaraki 319-1292 (JP)**

(72) Inventors:
• **OKUDE, Mariko,**
**c/o Hitachi Research Laboratory**
**Hitachi-shi, Ibaraki 319-1292 (JP)**

• **MATSUO, Shigeru,**
**c/o Hitachi Research Laboratory**
**Hitachi-shi, Ibaraki 319-1292 (JP)**
• **NAKAHARA, Takashi,**
**c/o Hitachi Research Laboratory**
**Hitachi-shi,**
**Ibaraki 319-1292 (JP)**

(74) Representative: **Beetz & Partner**
**Steinsdorfstrasse 10**
**D-80538 München (DE)**

(54) **PORTABLE COMMUNICATION UNIT WITH NAVIGATION MEANS**

(57)      A portable communication apparatus having navigation means for guiding a route is configured to include: a current position calculation part for calculating a current position on the basis of GPS radio waves, a route guidance part for performing guidance along the route; and a position correction part for correcting the current position in corporation with an apparatus different from the portable communication apparatus. The portable communication apparatus sets a position correction inhibited section where a position correction process by the position correction part is inhibited on a map including the route and inhibits the position correction process when the current position calculated by the current position calculation part exists within the position correction inhibited section.

FIG. 1

**Description**

TECHNICAL FIELD

The present invention relates to a portable communication apparatus including position measuring means therein including navigation means.

BACKGROUND ART

In portable telephones representing portable communication apparatuses, with increase in processing power and increase in performance of mounted memories and the like, technologies for mounting various additional functions on the portable telephones have been realized. Among these additional functions is proposed a portable telephone that mounts a navigation function for receiving electromagnetic waves from GPS (Global Positioning System) satellites and providing a current position of the portable telephone with a map. Japanese laid-open patent application publication No. 11-018159 is known which includes a description of such a portable telephone. This enables a user to use the navigation function using GPS radio waves with the portable telephone, so that restriction in use places is relaxed to have increased utilizing chances.

The portable telephone makes a connection to a position measuring server at predetermined time and performs a position correction process to increase an accuracy of position information that the portable telephone obtained itself. However, because in the position correction process, a communication for connection to the server is performed, it takes more time to acquire the position information than a special navigation apparatus installed in a conventional vehicle and the like.

Further, because a position correction process and a guidance process at an intersection of roads cannot be executed at the same time, depending on processing power of the portable telephone, a problem may occur in that the guidance process is not started. First, if time for the position correction process and time for the guidance process do not overlap with each other, no problem occurs since each process is independently executed. On the other hand, if the time for the position correction process and the time for the guidance process overlap with each other, the position correction process of the portable telephone provides a large load on the processing power of the portable telephone due to a communication process with other apparatus and the like. Accordingly, it becomes difficult to execute another process (for example, the guidance process) in parallel during the position correction process. Thus, if an intersection has been reached during the position correction process, because the guidance process does not start, a problem occurs in that the user cannot receive a suitable guidance.

Accordingly, the present invention mainly aims to solve the above-mentioned problem and to provide a smooth guidance process by the portable communication apparatus including the navigation function.

DISCLOSURE OF THE INVENTION

In order to solve the above-mentioned problem, the present invention is a portable communication apparatus including navigation means for guiding a route and

characterized by being configured to include: a current position calculation part for calculating a current position on the basis of GPS radio waves; a route guidance part for performing guidance along the route; and a position correction part for correcting the current position in cooperation with an apparatus different from the above-mentioned portable communication apparatus, and

characterized in that the portable communication apparatus sets, on a map including the route, a position correction inhibited section where a position correction process by the position correction part is inhibited, and inhibits the position correction process in a case that the current position exists in the position correction inhibited section calculated by the current position calculation part.

According to the portable communication apparatus including such the navigation function, a smooth guidance process at the intersection can be provided by adding the position correction inhibition process at the position correction inhibited section.

BRIEF DESCRIPTION OF DRAWINGS

Fig. 1 is a drawing for showing picture image illustrations of guidance picture images regarding guidance for a map regarding one embodiment of the present invention.
Fig. 2 is a configuration drawing of a navigation system for a portable telephone regarding the one embodiment of the present invention.

Fig. 3 is a configuration drawing of the portable telephone regarding the one embodiment of the present invention.

Fig. 4 is a configuration drawing of a navigation server regarding the one embodiment of the present invention.

Fig. 5 is a drawing for illustrating an example of a data structure stored in a database regarding the one embodiment of the present invention.

Fig. 6 is a flowchart showing an outline of a process in the navigation system for the portable telephone regarding the one embodiment of the present invention.

Fig. 7 is a flowchart showing a request process of a route search regarding the one embodiment of the present invention.

Fig. 8 shows picture image drawings of a departure point selection picture image and a route display picture image regarding the one embodiment of the present invention.

Fig. 9 is a flowchart showing an operation inhibition process during running regarding the one embodiment of the present invention.

Fig. 10 is a flowchart showing a process regarding a position correction regarding the one embodiment of the present invention.

Fig. 11 is a flowchart showing a process for integrally receiving, by the portable telephone, voice data used in a guidance process regarding the one embodiment of the present invention.

Fig. 12 is a flowchart showing a process for divisionally receiving, by the portable telephone, the voice data used in the guidance process regarding the one embodiment of the present invention.

Fig. 13 is a configuration drawing of a navigation system providing cooperation between a vehicle-mounted terminal and the portable telephone.

Fig. 14 is a flowchart of forwarding a vehicle position to the portable telephone.

Fig. 15 is a flowchart of forwarding information down-loaded with the portable telephone to the vehicle-mounted terminal.

## BEST MODE FOR CARRYING OUT THE INVENTION

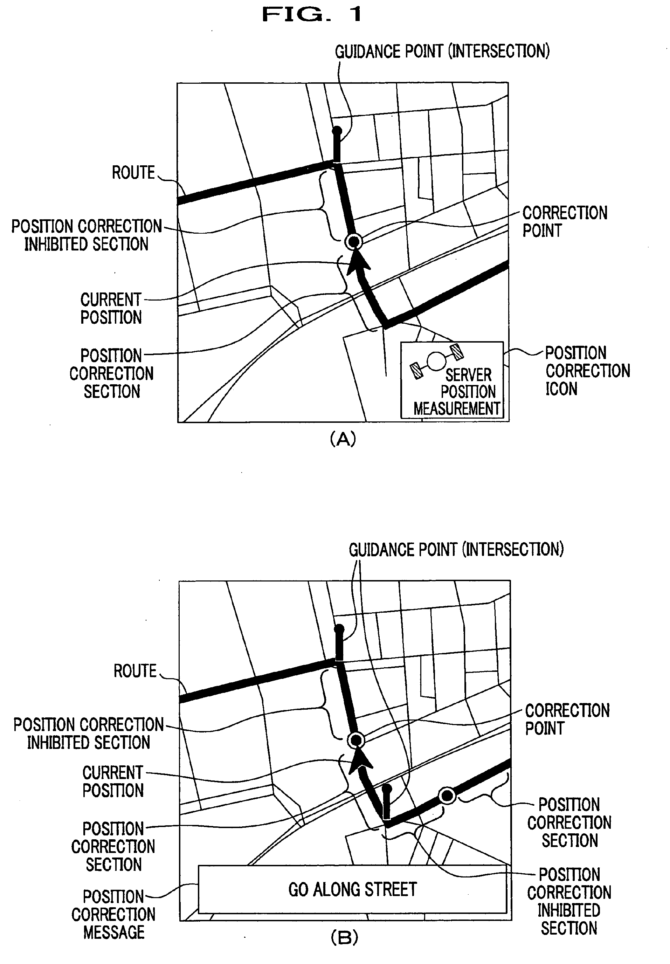

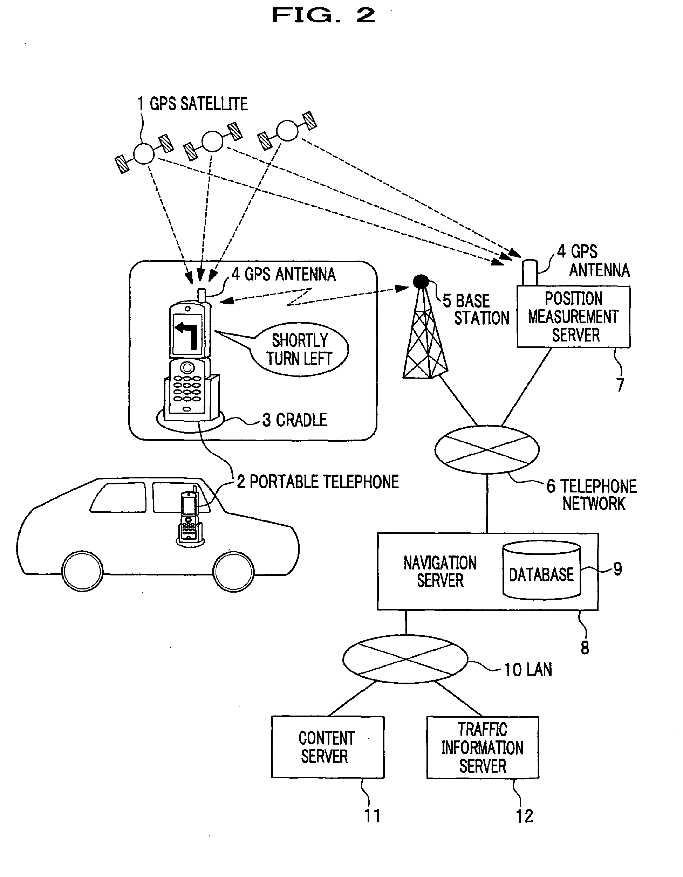

Hereinafter, will be described in detail with reference to drawings an embodiment of a navigation system for a portable communication apparatus to which the present invention is applied, where a portable telephone is exampled. First, will be described with reference to Figs. 1 to 5 a configuration of the navigation system for the portable telephone of the embodiment.

Fig. 1 shows drawings for illustrating guidance picture images regarding guidance of a map. A route guided by the portable telephone shows roads from a departure point to a destination. In the route exist guidance points such as intersections, where it is said that guidance is required upon guiding the route, in addition to the departure point of a start of the route and the destination of an end of the route. The portable telephone guides a line in the route by showing the line and/or an enlarged view of an intersection at each guidance point.

Further, the portable telephone executes a position correction process at predetermined time to increase accuracy in position information that the portable telephone obtained by itself. Fig. 1 shows a correction point where a position correction process is executed when the portable telephone reaches there, a position correction section that is a section where the position correction process is permitted, and a position correction inhibited section that is a section where the position correction process is inhibited. Here, in the position correction inhibited section, the start is the correction point, and an end is the guidance point. Accordingly, because the portable telephone inhibits the position correction process in the position correction inhibited section before the guidance point, the guidance process started upon reaching the guidance point can be smoothly performed without disturbance by the position correction process and the like. In other words, addition of a process for inhibiting the position correction process by providing the position correction inhibited section shown in Fig. 1 realizes a smooth guidance process. In Fig. 1, the section from the correction point to the guidance point is determined as the position correction inhibited section. However, in consideration of an error in measurement of a vehicle position a region may be set which includes the position correction inhibited section.

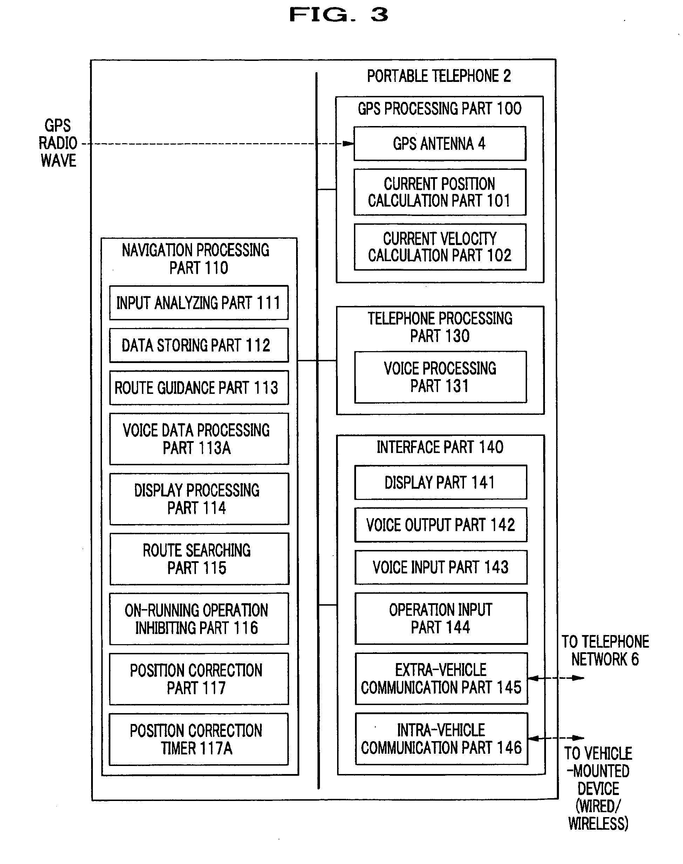

Fig. 2 is a configuration drawing of the navigation system for the portable telephone. The navigation system for the portable telephone is configured to include: GPS satellites 1 for radiating GPS radio waves; a portable telephone 2 for executing a navigation process on the basis of the position information obtained from the GPS radio waves; a cradle 3 for supplying an electric power to the portable telephone 2; a GPS antenna 4 used upon receiving the GPS radio waves by the portable telephone 2; a base station 5 for forwarding communication from the portable telephone 2 to a telephone network 6; a position measurement server 7 for executing the position correction process of the portable telephone 2 in response to a request from the portable telephone 2; a navigation server 8 for performing a route search in response to a request from the portable telephone 2; a database 9 for storing data used upon the route search; a LAN (Local Area Network) 10 used upon the route search for connecting respective apparatuses; a content server 11 for managing facility information of roads used upon the route search; and a traffic information server 12 for managing traffic information used upon the route search.

Fig. 3 is a configuration drawing of the portable telephone 2. The portable telephone 2 is configured to include: a GPS processing part 100 for executing a process on the basis of the GPS radio waves; a navigation processing part 110 for executing a process regarding navigation; a telephone processing part 130 for executing a process regarding telephones; and an interface part 140 for receiving an input to and an output from the portable telephone 2.

The GPS processing part 100 is configured to include: a current position calculation part 101 for calculating a current position on the basis of the GPS radio waves; a current velocity calculation part 102 for calculating a current velocity using a calculated current position and past positions; and the GPS antenna 4. The current velocity calculation part 102 calculates the current velocity by calculation indicated by Equation 1 shown below. A subscript i indicates current data, and a subscript i-1 indicates past data. A variable t indicates time data, and a variable p indicates coordinates of the position.

$$v_{ti} = \frac{|p_{ti} - p_{ti-1}|}{t_i - t_{i-1}}, p = (x, y) \qquad \cdots \text{Equation (1)}$$

The navigation processing part 110 is configured to include: an input analyzing part 111 for analyzing entered data; a data storing part 112 for storing route data/guidance data/map data/traveling trace record data; a route guidance part 113 for performing traveling guidance along a searched route; a voice data processing part 113A for processing voice data used for guiding the route; a display processing part 114 for generating a picture image to be displayed; a route searching part 115 for searching a route adaptable to a search condition entered by a user; an on-running operation inhibiting part 116 for inhibiting an operation by the user during running; a position correction part 117 for correcting the position in cooperation with an external apparatus for the portable telephone 2; and a position correction timer 117A for controlling timing when the position correction process is started. In a case that the route searching part 115 is not included as a configuration element, the navigation server 8 may search the route to the destination.

The telephone processing part 130 is configured to include a voice processing part 131 for executing a conversation between the user of the portable telephone 2 and a communication partner.

The interface part 140 is configured to include a display part 141 configured with a display or the like for displaying a picture image for the user; a voice output part 142 configured with a speaker or the like for outputting a voice signal; a voice input part 143 configured with a microphone or the like for inputting a voice signal from the user; an operation input part 144 configured with buttons or the like for receiving an input by the user; an extra-vehicle communication part 145 of an interface for performing communication with respective apparatuses outside the vehicle through the base station 5; and an intra-vehicle communication part 146 of an interface for performing communication with respective apparatuses within the vehicle.

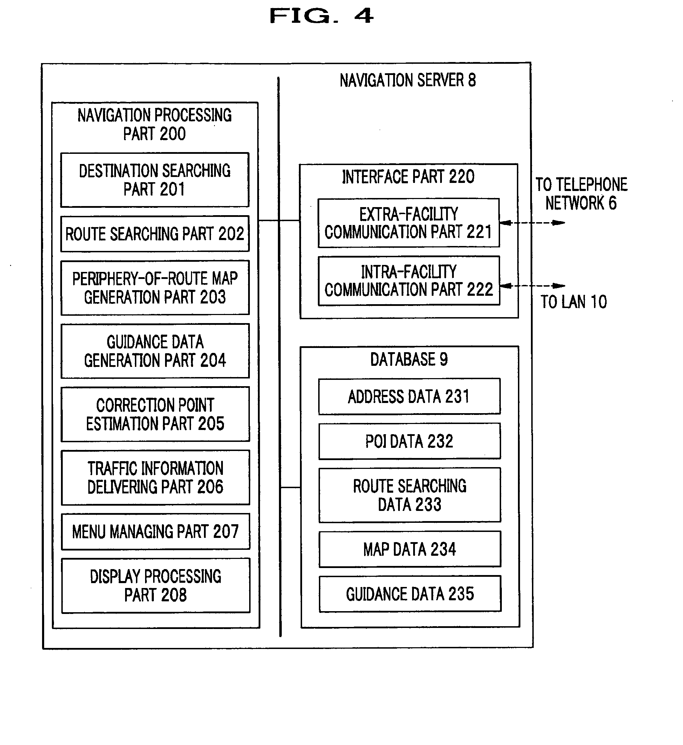

Fig. 4 is a configuration drawing of the navigation server 8. The navigation server 8 is configured to include: a navigation processing part 200 for executing a route searching process regarding the navigation; an interface part 220 for receiving an input to and an output from the navigation server 8; and a database 9.

The navigation processing part 200 is configured to include: a destination searching part 201 for searching the destination from attribution information of the destination; a route searching part 202 for searching the route from the departure point to the destination; a periphery-of-route map generation part 203 for generating a map of a periphery of the route covering the searched route; a guidance data generation part 204 for generating guide data 235 of guidance information at the guidance point; a correction point estimation part 205 for estimating the correction point corresponding the guidance point; a traffic information delivering part 206 for delivering traffic information; a menu managing part 207 for managing status transition of a menu picture image provided on the portable telephone 2; and a display processing part 208 for generating a picture image displayed on the portable telephone 2.

The interface part 220 is configured to include an extra-facility communication part 221 of an interface for communicating through the base station 5 with the outside of the facility where the navigation server 8 is installed; an intra-facility communication part 222 of an interface for communicating with respective apparatuses within the facility where the navigation server 8 is installed.

The database 9 inclusively manages address data 231 of attribution information of the destination referred upon searching the destination by the destination searching part 201; POI data 232 of attribution information of the destination referred upon searching by the destination searching part 201; route searching data 233 referred upon searching by the route searching part 202; map data 234 of a base for cutting out the periphery-of-route map by the periphery-of-route map generation part 203; and guidance data 235 of guidance information at the guidance points configured with names of intersections, turn-right and turn-left information, lane information and the like.

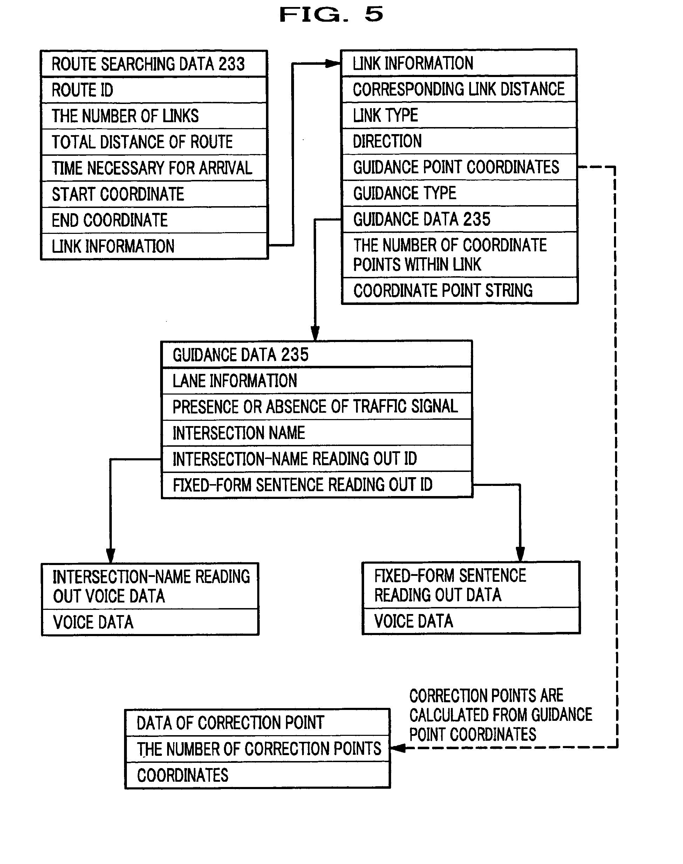

Fig. 5 is a drawing for illustrating an example of data structure stored in the database 9. The route searching data 233 is configured to include: a route ID of an inherent number added for identifying the route by the navigation server 8; the number of links for indicating a total of links included in the route, the link being a section connecting more than one nodes (intersection), a total distance of the route; and time necessary for arrival at the destination to which traffic information is added; and include, as needed: start coordinates; end coordinates; and link information.

The link information capable of being referred by the route searching data 233 is configured to include: a corresponding link distance; a link type for indicating a road type (national highway/main local road/general road/toll road/expressway, and the like); a direction for indicating a branching direction (right/left, and the like); guidance point coordinates; a guidance type for indicating an attribution of the guidance point (destination/via point/mere guidance point, and the like); guidance data 235; the number of coordinate points within a link for indicating the number of coordinate points configuring the link; and a coordinate point string for indicating coordinates configuring the link.

The guidance data 235 capable of being referred from the link information is configured to include: lane information; the presence or absence of traffic signals; an intersection name; an intersection-name reading out ID for identifying intersection name reading out voice data, and a fixed-form sentence reading out ID for identifying fixed-form sentence reading out data.

The intersection name reading out voice data capable of being referred by the guidance data 235 is configured as voice data for indicating an intersection name such as "North one of the Tokyo Metropolitan Government Office." Here, the portable telephone 2 generates voice guidance with an application for executing the navigation process such as "turn right at the North intersection of the Tokyo Metropolitan Government Office" by combining voice data for indicating the name of the intersection with standard voice data such as "turn right."

Reading out data of the fixed-form sentence capable of being referred by the guidance data 235 is configured as voice data indicating guidance independent on the intersection such as "turn right at the intersection". In addition, the data is possessed by the portable telephone 2 and used in the guidance process at intersections having no names.

The data of the correction point calculated from the guidance point coordinates are configured to include the number of correction points and the coordinates.

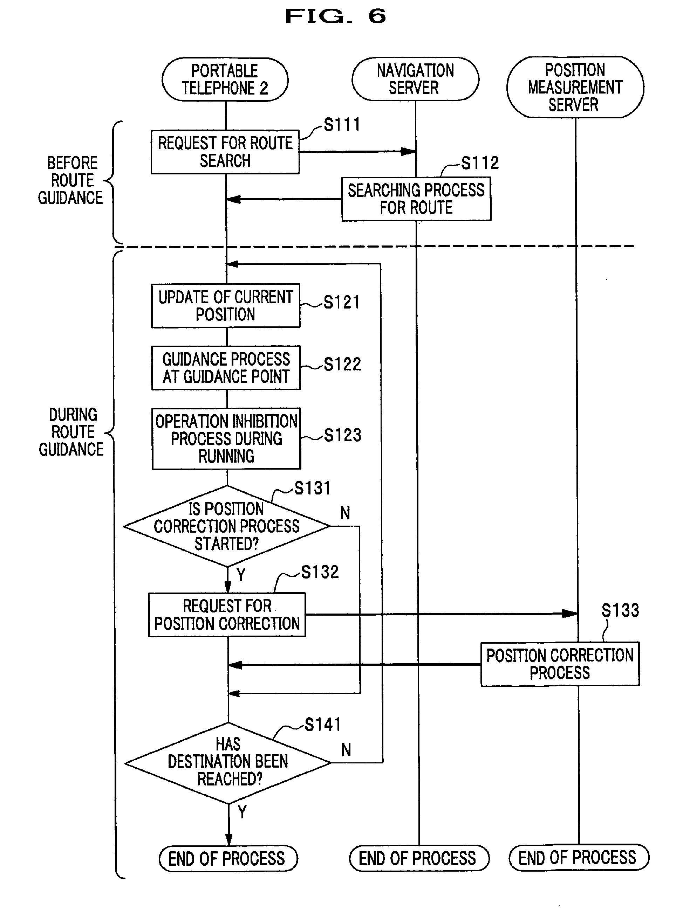

The configuration of the navigation system for the portable telephone of the embodiment has been mentioned above. Next, will be described along Fig. 6 an outline of operation of the navigation system for the portable telephone of the embodiment with reference to Figs. 1 to 5. In addition, in the description of the operation, the configuration of the navigation system for the portable telephone will be described more specifically.

Fig. 6 is a flowchart showing an outline of a process of the navigation system for the portable telephone.

First, will be described an operation before the guidance of the route. The portable telephone 2 makes a request (S111) to the navigation server 8 for the route search. Here, the portable telephone 2 may make a request to the navigation server 8 for the route search adapted to searching conditions by adding: a road attribution such as prioritizing general roads and/or the number of candidates for the route in a case that there are a plurality of routes from the departure point to the destination; peripheral facilities; categories; and the like to a request message for the route search in addition to the departure point and the destination as the searching conditions.

Next, the navigation server 8 executes the searching process (S112) for the route and returns the result to the portable telephone 2 as a reply. Hereinafter, will be described sequentially a making process of periphery-of-route map generated by the searching process of the route. First, the navigation server 8 searches the route (roads) from the departure point to the destination with reference to the route searching data 233. Next, the navigation server 8 cuts out a map of a background along the searched route with reference to the map data 234. After this, the navigation server 8 adds information (enlarged view and the like) regarding the guidance at the guidance points included in the route to the map. Further, the navigation server 8 estimates on the basis of the coordinates of the guidance points the correction point that is data to be transmitted with the map.

Here, as a method of calculating the correction point from the coordinates of the guidance point is cited a method in which a point on the route having a predetermined distance from the coordinates of the guidance point. Further, the predetermined distance may be acquired from a product of a predicted traveling velocity acquired from the coordinates of the guidance point and predicted processing time. As the predicted traveling velocity are cited the vehicle velocity calculated by the current velocity calculation part 102, speed limits of roads, an average speed of the vehicle, a velocity calculated from traffic jam information of roads, a speed manually set by the driver, and/or the like. The predicted processing time is set on the basis of, for example, time until the position correction process is finished after connection to the position information server (communication access time is also considered).

Next, will be described an operation during guidance of the route. First, the portable telephone 2 updates the current position (S121). After this, the portable telephone 2 executes the guidance process at the guidance point (S122). As the guidance process, for example, displaying the enlarged view of an intersection at the guidance point and a voice guidance output are cited. A guidance picture image is displayed to include the current position of the vehicle and the guidance point as shown in the picture image drawing of the guidance picture image shown in Fig. 1. With the current position of the vehicle, data calculated by the current position calculation part 101 is continuously updated on the basis of the GPS radio waves acquired by the GPS antennas 4. Further, the portable telephone 2 executes the operation inhibition process (S123).

Further, will be described an operation regarding the position correction process out of the operations during the guidance of the route. Here, the portable telephone 2 executes a determination of whether the position correction process is started (S131). Next, the portable telephone 2 requests the position measurement server 7 for the position correction (S132). In addition, the portable telephone 2 may cause the request message of the position correction to include an initial position (approximate position). Further, the position measurement server 7 executes the position correction process (S133) and returns the result to the portable telephone 2 as a reply.

Here, the portable telephone 2 determines whether the current position reaches the destination of the route (S141). If the destination has been reached (Y in S141), a process is finished. On the other hand, if the destination has not been reached (N in S141), the process is returned to S121.

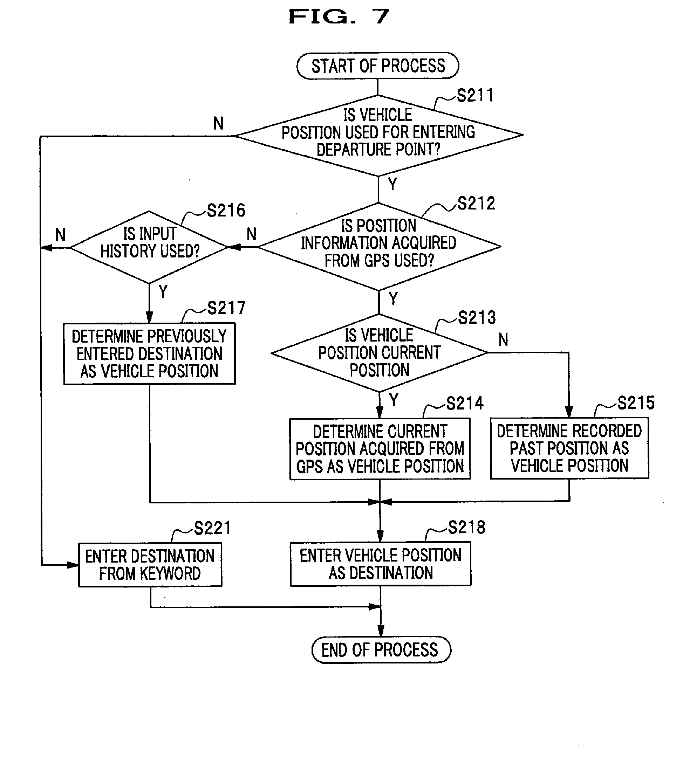

The outline of the operation of the navigation system for the portable telephone of the embodiment has been described above. Next, out of the operations of the navigation system of the portable telephone of the embodiment will be described in detail along Fig. 7 the request for the route search (S111) with reference to Figs. 1 to 6.

Fig. 7 is a flowchart showing a request process of the route search and shows an input process of the destination configuring the conditions of the route search used in the request for the route search (S111).

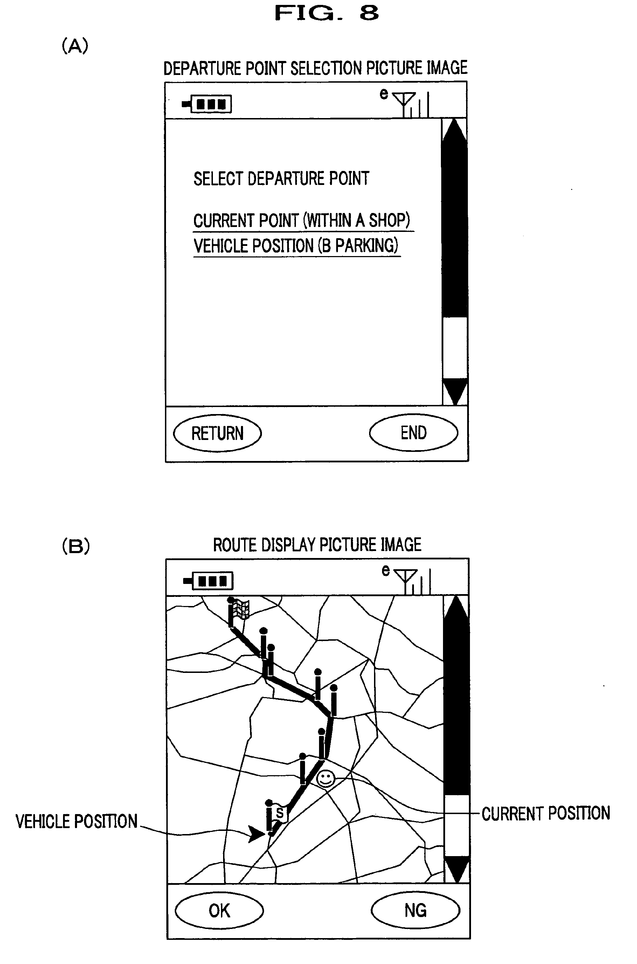

First, the portable telephone 2 causes the user to use the current position for entering the departure point (S211). Fig. 8 (A) shows a picture image displayed upon selection by the user. If the vehicle position is used (Y in S211), the process proceeds to S212. On the other hand, if the vehicle position is not used (N in S211), the process proceeds to S221. Next, the portable telephone 2 causes the user to select whether the position information acquired from the GPS radio waves (S212) is used. If the position information is used (Y in S212), the process proceeds to S213. On the other hand, if the position information is not used (N in S212), the process proceeds to S216.

Next, the portable telephone 2 judges whether the vehicle position exists around the current position (S213). Hereinafter will be described three methods for a judgment process of the vehicle position and the current position.

First, a first judgment process is a process for judgment made on the basis of an operation by the user. For example, judgment is made in accordance with whether the connection between the portable telephone and the vehicle-mounted terminal (cradle 3 and the like) is ON or OFF. If the portable telephone 2 exists within the vehicle, it is expected that the connection is made ON. Here, the connection includes wireless connection by transmission by radio waves in addition to the connection by wires or contact. In addition, if the portable telephone 2 compatibly serves as a remote control key (controls the open and close of doors of the vehicle), the judgment may be made by using judgment whether or not a key lock operation by the user is detected. In other words, an event in which the key lock operation is performed is accompanied with a high possibility in that the portable telephone 2 does not exist within the vehicle because the user is expected to leave the vehicle. Further, it is may be determined when the portable telephone 2 detects a stop of the vehicle when a vehicle-mounted device different from the portable telephone 2 transmits vehicle information (an engine stop, parking, the vehicle speed, and the like) to the portable telephone 2. A detail will be described later, but it is also considered to transmit the position information when the vehicle-mounted device detects the vehicle stop.

Next, the second judgment process is a method for making judgment on the basis of a difference in an external circumstance between an inside and an outside of the vehicle. For example, if there is a difference in temperature between the inside and the outside due to air conditioning, the portable telephone 2 makes a judgment on the basis of the temperature measured by thermal sensors. Further, if there is a difference in field intensity of a radio wave used by the portable telephone 2 making a call between the inside and the outside of the vehicle (it is not easy that the radio wave reaches the inside of the vehicle), the judgment is made using a change in the field intensity. Further, if there is a difference in a moving speed between the inside and the outside (the traveling velocity of the vehicle and a walking velocity), the judgment is made using the current velocity calculated by the portable telephone 2 by the current velocity calculation part 102. Further, if there is a difference in an environmental sound level between the inside and the outside of the vehicle (for example, engine sound is always generated in the inside of the vehicle), the judgment as to the inside and the outside is made by previously registering the engine sound in the portable telephone 2 and comparing it with sound currently measured or in accordance with the sound level.

A third judgment process is a method of making the judgment on the basis of the position information. If a route map received from the navigation server 8 by the portable telephone 2 includes facility data on the map such as POI (Pont of Interest), the judgment is made in accordance with a type of the facility data where the portable telephone is positioned. For example, if the portable telephone exists within a restaurant (means that the portable telephone exists not at a parking area, but within the restaurant), it is judged that the portable telephone 2 exists outside the vehicle.

On the basis of the judgment process mentioned above, when the vehicle position exists around the current position (Y in S213), the portable telephone 2 determines the current position acquired from the GPS radio waves as the vehicle position (S214). On the other hand, if the vehicle position is not around the current position (N in S213), the portable telephone 2 determines a recorded past position as the vehicle position (S215). Further, when the portable telephone 2 determines the recorded past position as the vehicle position, the guidance is not immediately started, but it may be allowed to start the guidance (S122) when it is detected that the current position becomes the vehicle position or when there is an input operation for start of guidance. Fig. 8 (B) shows a picture image for indicating a route when the recorded past position is determined as the vehicle position (S215). Because the vehicle position is different from the current position, respective positions are displayed with different icons.

Here, various methods are cited to determine, as the vehicle position, a position what time the portable telephone is positioned in the past time.

As a method of using time when a predetermined user's operation is made, for example, if the portable telephone 2 also serves as the remote control key (controls open and close of the doors), it is allowed to use time when the key lock operation is detected. This is because the event where the key lock operation is made results in expecting that the user left the vehicle, so that the portable telephone 2 has a high possibility in that it does not exist within the vehicle. Further, using the judgment (S213) of whether the vehicle position accords with the current position, it is allowed to consider time when the vehicle position becomes discord with the current position to be time when the portable telephone 2 is carried outside the vehicle. Next, the portable telephone enters the vehicle position as the destination (S218).

Here, will be described a process using no position information (N in S212). First, the portable telephone 2 causes the user to select whether or not an input history is used (S216). If the input history is used (Y in S216), the previously entered destination is determined as the vehicle position (S217). On the other hand, if the input history is not used (N in S216), the process proceeds to S221. Next, the portable telephone 2 enters the vehicle position as the destination (S218).

Further, when the vehicle position is not used (N in S212), and/or when the input history is used (N in S216), the portable telephone 2 enters the destination from keywords (S221). Here, the keywords are information capable of identifying the destination, for example, an address, a telephone number, and the like.

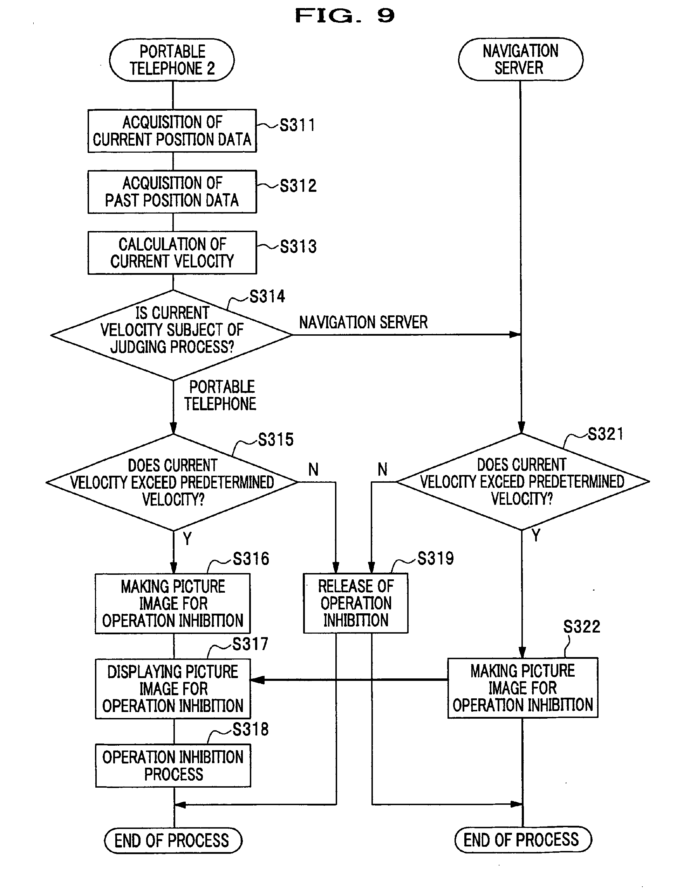

The detail of the request (S111) for the route search has been described above. This can omit an operation of manually entering the destination when the portable telephone 2 is positioned outside the vehicle. Next, will be described along Fig. 9 a detail of the operation inhibition process (S123) during running out of the operation of the navigation system for the portable telephone with reference to Figs. 1 to 8. This can make the driver concentrate attention to driving. Further, the operation inhibition means not to inhibit an output such as a picture image display, but to inhibit only an input (operation) to the portable telephone 2.

Fig. 9 is a flowchart showing the operation inhibition process during running.

First, the portable telephone 2 acquires the current position data (S311). Next, the portable telephone 2 acquires past position data (S312). After this, the portable telephone 2 calculates the current velocity using the current velocity calculation part 102 (S313).

Here, will be described a case that the navigation server 8 becomes a subject of the current velocity judgment process (navigation server in S314). The navigation server 8 judges whether the current velocity exceeds a predetermined velocity (S321). If the current velocity does not exceed the predetermined velocity (N in S321), the portable telephone 2 releases the operation inhibition (S319) by informing the portable telephone 2 of it and the process is finished. When the operation inhibition is released (S319), a menu picture image is displayed, so that the user can make a selection from the menu on the menu picture image. On the other hand, when the current velocity exceeds the predetermined velocity (Y in S321), the navigation server 8 makes a picture image for the operation inhibition (S322) to cause the portable telephone 2 to display it after informing. In this event, displaying a message of "navigation operation is not allowed during running" as the picture image of the operation inhibition made by the navigation server 8 (S328) alarms the user.

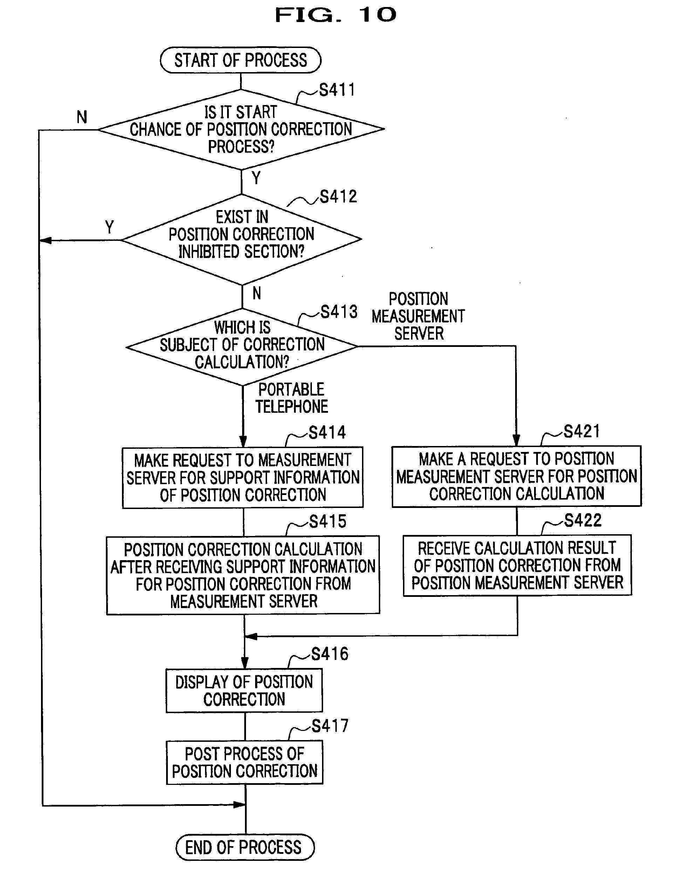

The detail of the operation inhibition process during running (S123) has been mentioned above. Next, will be described along Fig. 10 a detail of the position correction process (S131 to S133) out of the operations of the navigation system for the portable telephone of the embodiment with reference to Figs. 1 to 9.

Fig. 10 is a flowchart showing a process regarding the position correction.

First, the portable telephone 2 confirms whether a start chance of the position correction process occurs (S411). As the start chance is cited, for example, a case that the current position reaches the correction point (not always one point, but the vicinity of the correction point), in addition to a case that the user have an explicit operation (for example, depression of a GPS button) and a case that it is generated every predetermined time using a position correction timer 117A.

If the starting chance of the position correction occurs (Y in S411), the process proceeds to S412. On the other hand, if the starting chance of the position correction does not occur (N in S411), the process regarding the position correction process of this time is finished.

Next, the portable telephone 2 checks whether or not the current position exists in the position correction inhibited section (S412). First, if the current position exists in the position correction inhibited section (Y in S412), a process regarding the position correction process this time is finished not to disturb the guidance process. On the other hand, if the current position does not exist in the position correction inhibited section (N in S412), the process proceeds to S413.

Here, the portable telephone 2 confirms a subject of a calculation as to which device executes the position correction calculation (S413). First, if the subject of the calculation is the portable telephone 2 (Y in S413), the portable telephone 2 executes the calculation itself on the basis of support information for position correction from the measurement server 7. More specifically, the portable telephone 2 makes a request to the measurement server 7 for the support information of the position correction (S414), and executes the position correction calculation (S415) after receiving the support information for the position correction from the measurement server 7. Here, the support information for the position correction is, for example, satellite information (information regarding revolution in satellite orbit and the like), and information for improving a GPS reception sensitivity (a prediction value of Doppler shift and the like). On the other hand, in a case that the subject of the calculation is the measurement server 7 (N in S413), the portable telephone 2 makes a request (S421) to the position measurement server 7 for the position correction calculation and receives (S422) a calculation result of the position correction from the measurement server 7.

Further, the portable telephone 2 displays (S416) the position correction calculated in S415 or S422. In addition, the portable telephone 2 executes a post process (S417) of the position correction. Here, the post process is, for example, to reset a next start time in the position correction timer 117A.

The guidance picture image shown in Fig. 1 corresponds to a picture image drawing showing that the position correction is being processed. When making an indication (S416) of the position correction, the portable telephone 2 can cause a screen to display the information for indicating that the position correction is being processed. Fig. 1(A) is an example of displaying a position correction icon during the position correction being processed. The position correction icon is displayed upon connection with the position measurement server 7 to inform the user of executing the position correction process by changing a color of the icon or indication with an animation. It is also considered to change the color (display mode) with passage of time from acquisition of the satellite information. When being unable to acquire the position data from an internal GPS (unable to update the current position) during the position correction, the portable telephone 2 may fix the current position mark. Further, the portable telephone 2 can change the display mode of a color and a type of lines of the current position mark during the position correction. Further, the portable telephone 2 can display the correction point together and/or a point where the correction has been actually done. On the other hand, Fig. 1 (B) shows an example where a position correction message is displayed because the current position mark is not updated when the measurement server 7 under processing the position correction is connected. During the position correction, if the portable telephone 2 calculates a travailing velocity of its own vehicle by the method described with Fig. 10, and/or if the portable telephone 2 includes sensors for detecting a position such as a geomagnetism sensor (compass) and a gyrocompass, it is allowed to update its own vehicle mark after its own vehicle mark is predicted from sensor outputs of these sensors.

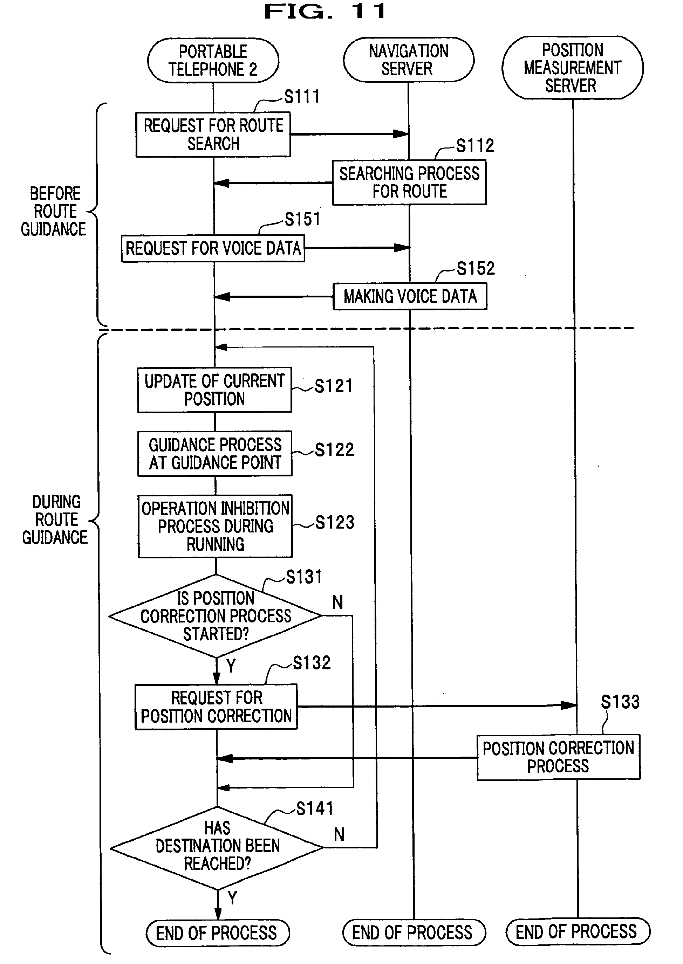

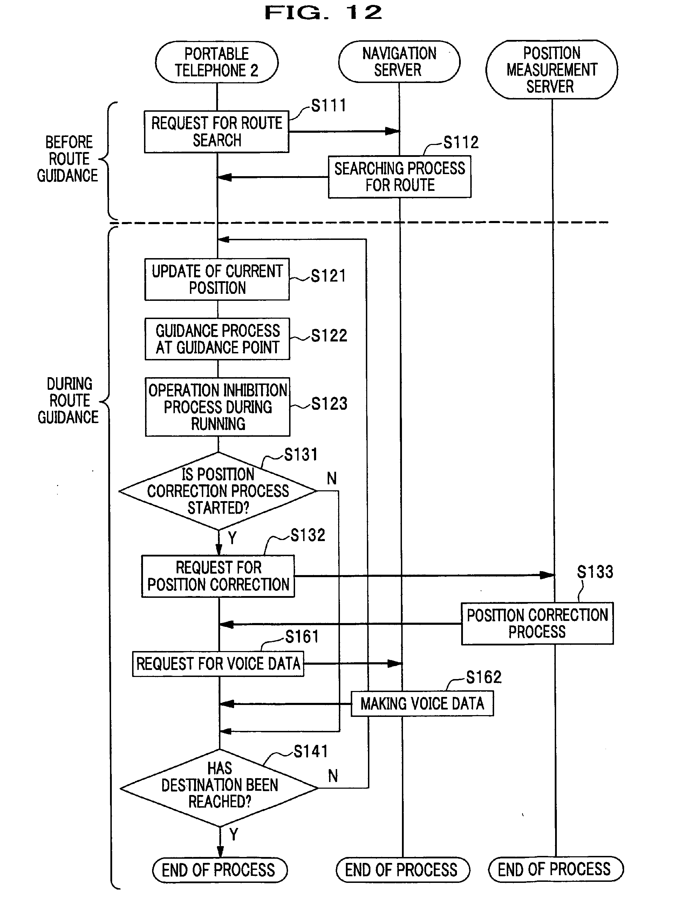

As mentioned above, the detail of the position correction process (S131 to S133) has been described. Next, will be described along Figs. 11 and 12 detail of a process regarding the voice data used in the guidance process (S122) at a guidance point among the operations of the navigation system for the portable telephone of the embodiment with reference to Figs. 1 to 10.

First, will be described Figs. 11 and 12. Figs. 11 and 12 are flowcharts which are derived by adding a request process and a making process for the voice data used in the guidance process (S122) at the guidance point to the flowchart showing an outline of the navigation system shown in Fig. 6. First, Fig. 11 shows a process in which the portable telephone 2 integrally receives the voice data used in the guidance process by the portable telephone 2. Fig. 12 shows a process in which the portable telephone 2 divisionally receives the voice data used in the guidance process. Accordingly, the number of times of receiving the voice data is one time per route (in the case of Fig. 11) or per guidance point included in the route (in the case of Fig. 12).

Here, in a method in which one time of reception is made per route (Fig. 11), before the guidance of the route, the portable telephone 2 makes a request (S151) to the navigation server 8 for the voice data. Then, the navigation server 8 makes the voice data to return it to the portable telephone 2. Accordingly, the voice data for a plurality of guidance points can be efficiently received by one time of connection, so that there is an advantageous effect in that there is no influence although a communication status during the guidance of the route is poor.

On the other hand, in the method of reception per guidance point included in the route (Fig. 12), the portable telephone 2 makes a request (S161) to the navigation server 8 for the voice data during the guidance (for example, at time when the correction point is reached). Then, the navigation server 8 makes the voice data (S162) and returns it to the portable telephone 2. Accordingly, because necessity of holding the voice data at a guidance point remote from the current position is eliminated, a memory having a relative low capacity for storing the voice data is allowed, so that it is adapted to a small device such as the portable telephone 2.

Here, will be described the making processes of the voice data (S152 and/or S162). The voice data is classified into two types in accordance with the presence or absence of the name of the intersection. First, at a guidance point having the name of the intersection, the portable telephone 2 makes a voice guidance ("turn right at the North intersection of the Tokyo Metropolitan Government Office") by combining a fixed-form guidance ("turn right at" and the like) previously stored in the portable telephone 2 with the name of the intersection ("the North intersection of the Tokyo Metropolitan Government Office") delivered from the measurement server 7 to reproduce it. On the other hand, at the guidance point having no name of the intersection, the portable telephone 2 reproduces a fixed-form guidance ("turn right at an intersection 300 m ahead" or the like) previously stored in the portable telephone 2.

If the method of acquiring the voice data is selected (integrally or divisionally), a setting picture image for a guidance option is displayed by selecting a term "guidance option" from a setting menu. First, the portable telephone 2 causes the user to select ON/OFF of the voice guide for the guidance option. Further, when ON is selected for the voice guide, the portable telephone 2 enables the user to select the method of acquiring the voice data (either "integrally reception" or "divisionally reception"). Further, it is allowed to display alternatives of information items (maps, names of intersections, facility guidance and the like) that are received as the guidance information. Then, the portable telephone 2 makes the request (S151 and/or S161) for the voice data in accordance with the selected method of acquiring the voice data.

In addition to the method of acquiring the voice data, it is considered to provide a selection as to whether information such as the maps (or an enlarged view of an intersection), the names of intersections, and detailed guidance is added to the guidance data to acquire it. This enables a guidance matched to user needs such that a user who desires to prioritize communication time is supplied with simple guidance data, another user who desires to prioritize detailed data to the communication time is supplied with the detailed guidance data.

As above, the detail of the process regarding the voice data used in the guidance process (S122) at the guidance point has been described.

The present invention mentioned above can be carried out with broad modifications without departure from the subject of the present invention.

For example, a communication between the portable telephone 2 and other devices may have such a type that a plurality of messages are separately transmitted and received. If destinations of a plurality of messages are the same (for example, the request for the route search in S111 and the request for the voice data in S151), it is allowed to integrate a plurality of messages into one message and transmit it one time. Similarly, a response to the integrated message may be done by either of one time of reception or separated receptions. Further, if destinations of a plurality of messages are different from each other, (for example, the request for the route search in S111 and the request for the position correction in S132), it is allowed to combine a plurality of the messages into one message (a destination of any one of the messages are adopted) to transmit it one time. Then, the device that receives the integrated message divides the integrated message and processes itself a message having its own destination and forwards the messages having destinations different from its own destination without processes for their destinations, respectively.

Further, if a request is made to the navigation server 8 for a destination point search in the portable telephone 2, it is also considered to integrate the request for the destination point search with the request of the position correction (S132) to transmit it one time. The request for the position correction (S132) may be made when any input operation is done in the portable telephone 2. This provides the route search on the basis of more accurate position information.

Further, regarding the position correction inhibition process by checking (S412) whether or not the current position exists in the position correction inhibited section, the inhibition process is not limited to the position correction process, but another process disturbing the guidance process may be inhibited together. As another process is cited an additional process having no direct relation with the route guidance such as a reproduction process of a moving picture content.

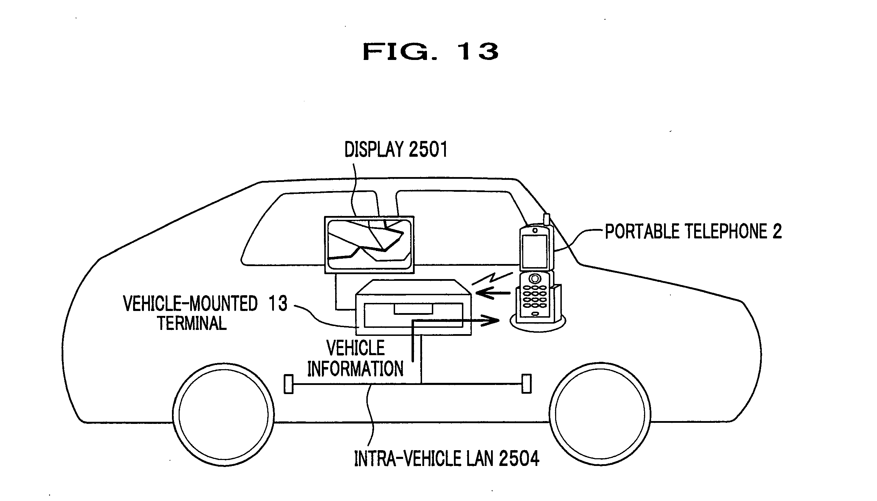

As shown in Fig. 13, the vehicle-mounted terminal 13 configuring the navigation system to which the present invention is applied has measuring means such as the GPS. The vehicle-mounted terminal 13 is connected to an intra-vehicle LAN 2504 to be able to acquire various types of information regarding the vehicle such as open and close of the doors, turn-on information of head lights, and information regarding ON/OFF of brakes, a shift position, and intra- and extra- temperatures. Here, another means for acquiring the vehicle information is also possible as long as the means is capable of acquiring the vehicle information other than the intra-vehicle LAN 2504. For example, there is a method of acquiring information regarding parking of the vehicle and the vehicle velocity through a transmission cable of the vehicle. The display 2501 displays information necessary for a map drawn by the vehicle-mounted terminal 13 and/or for guidance to the destination. The vehicle-mounted terminal 13 is connected to the portable telephone 2 through the intra-vehicle communication part 146. For communication during this event, a wireless communication such as a wireless LAN, infrared communication and/or wired communication such as serial communication are used.

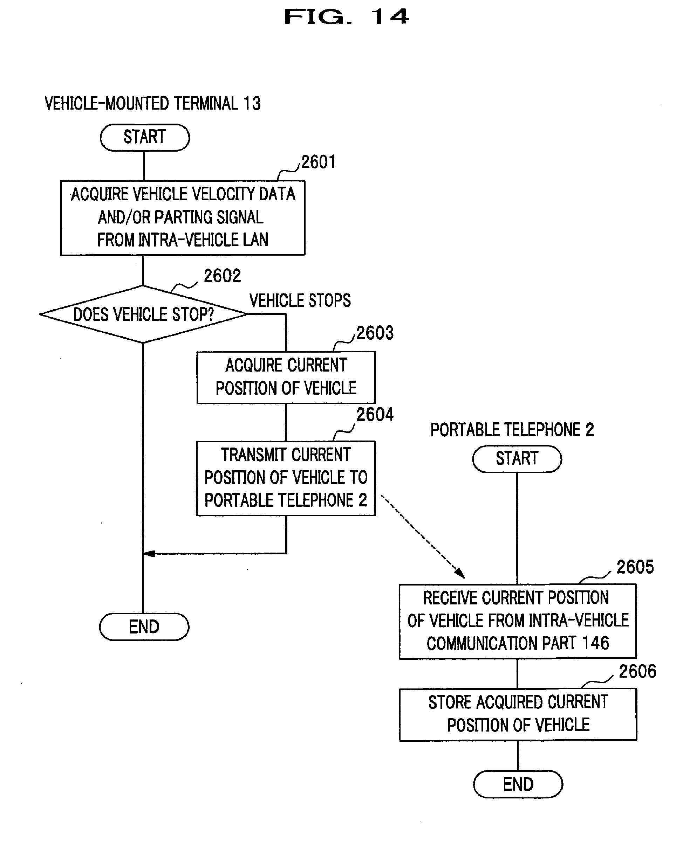

Fig. 14 is a process flowchart for the vehicle-mounted terminal 13 and the portable telephone 2 in which the position information is forwarded to the portable telephone 2 on the basis of the vehicle information acquired with the intra-vehicle LAN 2504. The vehicle-mounted terminal 13 acquires from the intra-vehicle LAN 2504 the vehicle data such as parking or the vehicle velocity data (2601), and judges a vehicle status from the acquired vehicle data, in this example, as to whether or not the vehicle stops (2602). When the vehicle stops, a position of the vehicle is acquired (2603), acquired position information is transmitted to the portable telephone 2 (2604). The portable telephone 2 acquires the position information sent by the vehicle-mounted terminal 13 through the intra-vehicle communication part 146 (2605) and stores it in the data storing part 112 (2606). As a method of forwarding the position information from the vehicle-mounted terminal 13 to the portable telephone 2 is also considered a method of forwarding it through the navigation server 8. The vehicle-mounted terminal 13 has circuit connection means for connecting to the telephone network and, upon detecting a stop of the vehicle (2602), transmits the vehicle position to the navigation server 8 through the circuit connection means. The portable telephone 2 acquires from the navigation server 8 the position information of the vehicle transmitted by the vehicle-mounted terminal 13. Timing when the position information of the vehicle is acquired from the navigation server 8 may be, for example, when the vehicle position (1711) in the picture image menu is selected.

On the display part 141 of the portable telephone 2 is displayed the vehicle position acquired from the vehicle-mounted terminal 13 as its own vehicle mark (1702) together with the map. Further, when the vehicle position on the picture image menu is selected (1711), a route to the destination is searched, wherein the vehicle position acquired from the vehicle-mounted terminal 13 is determined as the departure point. In this example, a method of transmitting the position information acquired by the vehicle-mounted terminal 13 to the potable terminal has been described. This enables the portable telephone 2 to make the route search without having the GPS antenna 4 where the vehicle position is determined as the departure point.

On the other hand, it is also considered that the portable telephone 2 sets the position information detected by the GPS antenna 4 as the vehicle position. In this case, the vehicle-mounted terminal 13 detects the stop of the vehicle (2602) and transmits a message of the stop of the vehicle to the portable telephone 2. The portable telephone 2 acquires, when receiving the message of the stop of the vehicle, acquires the position information from the GPS antenna 4, and determines the position information as the vehicle position. At a place where the GPS radio waves cannot be received due to indoor reception or interception by surrounding buildings, the GPS antenna 4 of the portable telephone 2 can measure with a high accuracy from the position information acquired from the measurement server 7, thus being able to determine the position information with a higher accuracy than the position information detected by the vehicle-mounted terminal 13. Further, it is also considered to select either of position information received from the vehicle-mounted terminal 13 or the position information detected by the GPS antenna 4 in accordance with the GPS radio wave status in the portable telephone 2.

In the process 2604, it is also considered to transmit a result of a diagnosis by the vehicle-mounted terminal 13 on the basis of vehicle information such as an amount of remaining fuel, a traveling distance, a coolant water temperature, and a tire status together with the above-mentioned vehicle position. It is also allowed to convert the result of diagnosing and the position information into voice data with voice synthesizing means in the vehicle terminal 13 and to transmit it to the portable telephone 2. This allows the portable telephone 2 to make an emergency call with the vehicle position information and the vehicle (diagnosis) information at a previously registered predetermined location. The emergency call is started, after a special button for emergency calls is provided in the portable telephone 2, by depressing the button. Alternatively, an application previously registered in the portable telephone 2 is started to make the emergency call.

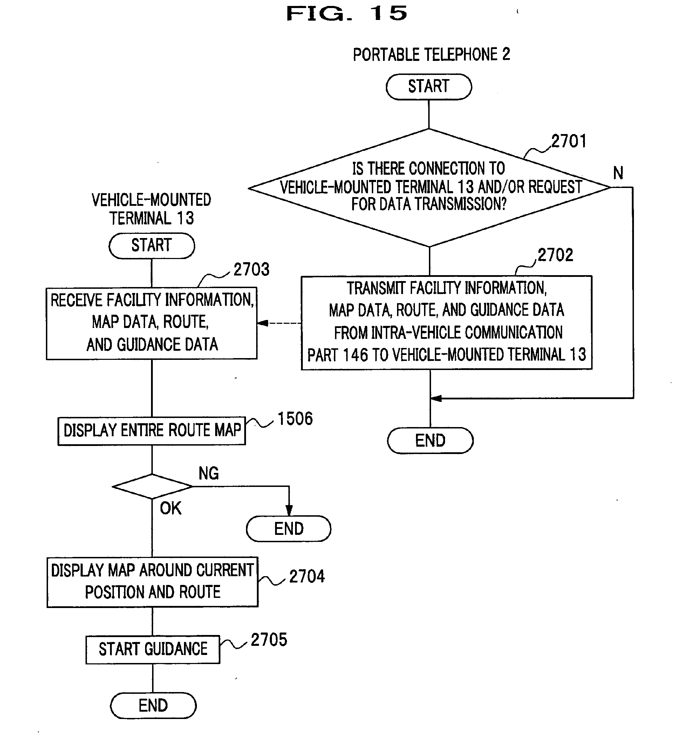

Fig. 15 is a process flowchart in which the portable telephone 2 forwards the facility information, the map data, the route, and the guidance data down-loaded from the navigation server 8 to the vehicle-mounted terminal 13 and guides to the destination. In the portable telephone 2, when a connection to the vehicle-mounted terminal 13 is detected and/or a request to the vehicle-mounted terminal 13 for data forwarding by a user's operation (2701) (depression of the button, a start of an application) is made, the facility information, the map data, the route, and the guidance data acquired from the navigation server 8 are transmitted to the vehicle-mounted terminal 13 (2702). Here, the vehicle-mounted terminal 13 has a GPS position measurement according to a perfect autonomous method of requiring no position measurement server, so that no correction point data is transmitted. Further, in a case that the vehicle-mounted terminal 13 has the map data regarding the route, it is enough to transmit only the route and the guidance data. When receiving the facility information, the map data, and the route and the guidance data from the portable telephone 2 (2703), the vehicle-mounted terminal 13 displays an entire route map on a display 2501 for prompting the user to confirm the route (1506). On the display 2501, indications "OK" and "NG" are displayed to confirm the route together with the entire route map. If "OK" is selected, a map around its own vehicle is displayed on the display 2501 on the basis of the map data and the route data received from the portable telephone 2 (2704) and starts the route guidance (2705).

Forwarding data necessary for the route guidance such as the map, the route, and the guidance data from the portable telephone 2 provides an easier-to-understand guidance using outputting means of the vehicle-mounted terminal 13 such as the display 2501, and voice outputting means (voice synthesizing process, speaker). If the portable telephone 2 has a video output I/F, the video signal may be applied to the display 2501 to display the map, the route, and the guidance information.

Further, the present invention can be embodied as route guidance programs used in the portable communication apparatus described in the embodiment. The followings are cited:

(1) A route guidance program used in a portable communication apparatus including navigation means for guiding a route, the program causing the portable communication apparatus to function as: a current position calculation part for calculating a current position on the basis of GPS radio waves; a route guidance part for performing guidance along the route; and a position correction part for correcting the current position in cooperation with an apparatus different from the above-mentioned portable communication apparatus and causing the portable communication apparatus to set, on the map including the map, a position correction inhibited section where a position correction process by the position correction part is inhibited, and to inhibit the position correction process in a case that the current position exists in the position correction inhibited section calculated by the current position calculation part.

(2) The route guidance program for the portable communication apparatus, which the route guidance program causes the portable communication apparatus to further include and operate a route searching part for searching a route matched to the entered searching condition, wherein the route searching part requires to enter a departure point of the route configuring the searching condition with a history of the current position calculated by the current position calculation part and determines the departure point of the route as a position of the history of the current position at time when an open and close operation of a vehicle door is entered.

(3) The route guidance program for the portable communication apparatus, which the route guidance program causes the portable communication apparatus to further include and operate a route searching part for searching a route matched to the entered searching condition to function, wherein the route searching part requires to enter a departure point of the route configuring the searching condition with the current position calculated by the current position calculation part or the history of the current position and determines the departure point of the route as the current position, when a connection between the portable communication apparatus and the vehicle-mounted apparatus mounted on the vehicle exists, and determines, when the connection between the portable communication apparatus and the vehicle-mounted apparatus does not exist, the departure point of the route as the position of the history of the current position at time when a status transients from a status in which the connection with the vehicle-mounted apparatus exists to a status in which the connection does not exist.

(4) The route guidance program for the portable communication apparatus, which the route guidance program causes the portable communication apparatus to further include and operate an on-running operation inhibition part for inhibiting an operation during running to function it, wherein the on-running operation inhibition part calculates a current velocity with the current position calculated by the current position calculation part and the history of the current position, and inhibits the operation when the current velocity exceeds a predetermined velocity.

(5) The route guidance program for the portable communication apparatus, which the route guidance program causes the portable communication apparatus to further include and operate a voice data processing part for processing voice data used for guidance of the route to function, wherein the voice data processing part outputs, when the portable telephone records voice data of which name corresponds to a guidance point where guidance of the route is made upon reaching, the voice data having the name corresponding to the guidance point and voice data of the fixed-form guidance recorded in the portable communication apparatus together, and outputs, when the portable communication apparatus does not record the voice data of which name corresponding to the guidance point, the fixed-form voice data recorded in the portable communication apparatus together.

(6) The route guidance program for the portable communication apparatus, which the route guidance program causes the portable communication apparatus to further include and operate a voice data processing part for processing voice data used for guidance of the route to function, wherein the potable communication apparatus sequentially receives, while the route guidance part guides the route, voice data having a name corresponding to the guidance point existing around the portable communication apparatus out of the guidance points where the guidance of the route is made when the portable communication apparatus reach there, and the voice data processing part outputs the voice data having the name corresponding to the guidance point and the voice data having the fixed-form recording in the portable communication apparatus together.

## INDUSTRIAL APPLICABILITY

As mentioned above, the portable communication apparatus according to the present invention is useful as the navigation apparatus, and particularly preferable as the navigation apparatus used when the portable telephone is used as a portable communication apparatus during getting on a vehicle and walking.

## Claims

1. A portable communication apparatus including navigation means for guiding a route and **characterized by** being configured to include: a current position calculation part for calculating a current position on the basis of GPS radio waves; a route guidance part for performing guidance along the route; and a position correction part for correcting the current position in cooperation with an apparatus different from the above-mentioned portable communication apparatus, and **characterized in that** the portable communication apparatus sets, on a map including the route, a position correction inhibited section where a position correction process by the position correction part is inhibited; and in a case that the current position calculated by the current position calculation part exists in the position correction inhibited section, the portable communication apparatus inhibits the position correction process.

2. The portable communication apparatus including the navigation means as claimed in claim 1, **characterized in that** the portable communication apparatus is connected to a server apparatus and transmits a departure point of a route using a history of the current position calculated by the current position calculation part, wherein a position of the history of the current position when a vehicle stops is determined as the departure point of the route.

3. The portable communication apparatus including the navigation means as claimed in claim 1, **characterized by** further including a route searching part for searching a route matched to an entered searching condition, and **characterized in that** the route searching part requires to enter a departure point of the route configuring the searching condition using the current position calculated by the current position calculation part and/or a history of the current position, acquires time when a vehicle stops and/ or position information when the vehicle stops in a case that connection between the portable communication apparatus and a vehicle-mounted apparatus mounted on the vehicle exists, and determines vehicle position at time when the vehicle stops as the current position.

4. The portable communication apparatus including the navigation means as claimed in claim 1, **characterized by** further including an operation inhibition part for inhibiting an operation during running, and **characterized in that** the operation inhibition part calculates a current velocity with the current position calculated by the current position calculation part and a history of the current position, and inhibits the operation when the current velocity exceeds a predetermined velocity.

5. The portable communication apparatus including the navigation means as claimed in claim 1, **characterized in that** the portable communication apparatus is connected to a server apparatus and further includes a voice data reproduction part for receiving a route, guidance data, and voice data from the server apparatus and for reproducing the voice data used for guidance of the route, and the voice data reproduction part outputs voice data having a name corresponding to the guidance point out of the received voice data.

6. The portable communication apparatus including the navigation means as claimed in claim 1, further including a voice data reproduction part for reproducing voice data used for guidance of the route, **characterized in that** the portable communication apparatus sequentially receives, while the route guidance part guides the route, from the server apparatus, the voice data having a name corresponding to the guidance point positioned around the portable communication apparatus out of the guidance points where the guidance of the route is made in response to arrival of the portable communication apparatus, and the voice data processing part outputs the voice data having the name corresponding to the guidance point.

# FIG. 1

GUIDANCE POINT (INTERSECTION)

ROUTE

POSITION CORRECTION
INHIBITED SECTION

CURRENT
POSITION

POSITION
CORRECTION
SECTION

CORRECTION
POINT

SERVER
POSITION
MEASUREMENT

POSITION
CORRECTION
ICON

(A)

GUIDANCE POINT (INTERSECTION)

ROUTE

POSITION CORRECTION
INHIBITED SECTION

CURRENT
POSITION

POSITION
CORRECTION
SECTION

POSITION
CORRECTION
MESSAGE

CORRECTION
POINT

POSITION
CORRECTION
SECTION

POSITION
CORRECTION
INHIBITED
SECTION

GO ALONG STREET

(B)

# FIG. 2

# FIG. 3

PORTABLE TELEPHONE 2

GPS PROCESSING PART 100

GPS ANTENNA 4

CURRENT POSITION CALCULATION PART 101

CURRENT VELOCITY CALCULATION PART 102

GPS RADIO WAVE

NAVIGATION PROCESSING PART 110

INPUT ANALYZING PART 111

DATA STORING PART 112

ROUTE GUIDANCE PART 113

VOICE DATA PROCESSING PART 113A

DISPLAY PROCESSING PART 114

ROUTE SEARCHING PART 115

ON-RUNNING OPERATION INHIBITING PART 116

POSITION CORRECTION PART 117

POSITION CORRECTION TIMER 117A

TELEPHONE PROCESSING PART 130

VOICE PROCESSING PART 131

INTERFACE PART 140

DISPLAY PART 141

VOICE OUTPUT PART 142

VOICE INPUT PART 143

OPERATION INPUT PART 144

EXTRA-VEHICLE COMMUNICATION PART 145

INTRA-VEHICLE COMMUNICATION PART 146

TO TELEPHONE NETWORK 6

TO VEHICLE -MOUNTED DEVICE (WIRED/ WIRELESS)

# FIG. 4

NAVIGATION SERVER 8

NAVIGATION PROCESSING PART 200

DESTINATION SEARCHING PART 201

ROUTE SEARCHING PART 202

PERIPHERY-OF-ROUTE MAP GENERATION PART 203

GUIDANCE DATA GENERATION PART 204

CORRECTION POINT ESTIMATION PART 205

TRAFFIC INFORMATION DELIVERING PART 206

MENU MANAGING PART 207

DISPLAY PROCESSING PART 208

INTERFACE PART 220

EXTRA-FACILITY COMMUNICATION PART 221

INTRA-FACILITY COMMUNICATION PART 222

TO TELEPHONE NETWORK 6

TO LAN 10

DATABASE 9

ADDRESS DATA 231

POI DATA 232

ROUTE SEARCHING DATA 233

MAP DATA 234

GUIDANCE DATA 235

# FIG. 5

| ROUTE SEARCHING DATA 233 |
| --- |
| ROUTE ID |
| THE NUMBER OF LINKS |
| TOTAL DISTANCE OF ROUTE |
| TIME NECESSARY FOR ARRIVAL |
| START COORDINATE |
| END COORDINATE |
| LINK INFORMATION |

| LINK INFORMATION |
| --- |
| CORRESPONDING LINK DISTANCE |
| LINK TYPE |
| DIRECTION |
| GUIDANCE POINT COORDINATES |
| GUIDANCE TYPE |
| GUIDANCE DATA 235 |
| THE NUMBER OF COORDINATE POINTS WITHIN LINK |
| COORDINATE POINT STRING |

| GUIDANCE DATA 235 |
| --- |
| LANE INFORMATION |
| PRESENCE OR ABSENCE OF TRAFFIC SIGNAL |
| INTERSECTION NAME |
| INTERSECTION-NAME READING OUT ID |
| FIXED-FORM SENTENCE READING OUT ID |

| INTERSECTION-NAME READING OUT VOICE DATA |
| --- |
| VOICE DATA |

| FIXED-FORM SENTENCE READING OUT DATA |
| --- |
| VOICE DATA |

CORRECTION POINTS ARE CALCULATED FROM GUIDANCE POINT COORDINATES

| DATA OF CORRECTION POINT |
| --- |
| THE NUMBER OF CORRECTION POINTS |
| COORDINATES |

# FIG. 6

| PORTABLE TELEPHONE 2 | NAVIGATION SERVER | POSITION MEASUREMENT SERVER |
|---|---|---|

BEFORE ROUTE GUIDANCE

S111 — REQUEST FOR ROUTE SEARCH

S112 — SEARCHING PROCESS FOR ROUTE

DURING ROUTE GUIDANCE

S121 — UPDATE OF CURRENT POSITION

S122 — GUIDANCE PROCESS AT GUIDANCE POINT

S123 — OPERATION INHIBITION PROCESS DURING RUNNING

S131 — IS POSITION CORRECTION PROCESS STARTED? N / Y

S132 — REQUEST FOR POSITION CORRECTION

S133 — POSITION CORRECTION PROCESS

S141 — HAS DESTINATION BEEN REACHED? N / Y

END OF PROCESS     END OF PROCESS     END OF PROCESS

18

# FIG. 7

```
                    ( START OF PROCESS )
                              │
                              │          ╭─S211
                         ╱────┴────╲
              N     ╱    IS VEHICLE      ╲
    ┌──────────────  POSITION USED FOR ENTERING
    │           ╲      DEPARTURE POINT?  ╱
    │                ╲────────┬─────────╱
    │                         │ Y
    │                         │          ╭─S212
    │         ╭─S216     ╱────┴────╲
    │    ╱────┴────╲    N ╱ IS POSITION  ╲
    │ N╱ IS INPUT   ╲◄───  INFORMATION ACQUIRED
    │◄── HISTORY USED? ╲    FROM GPS USED? ╱
    │   ╲────────┬────╱  ╲────────┬───────╱
    │            │ Y              │ Y
    │            │ ╭─S217         │        ╭─S213
    │   ┌────────┴────────┐   ╱──┴──╲                N
    │   │ DETERMINE PREVIOUSLY│ ╱ IS VEHICLE ╲  ┌──────────┐
    │   │ ENTERED DESTINATION │◄ POSITION CURRENT ───────►│
    │   │ AS VEHICLE POSITION │  ╲  POSITION  ╱            │
    │   └────────┬────────┘   ╲────┬──╱                    │
    │            │                 │ Y   ╭─S214            │  ╭─S215
    │            │       ┌─────────┴──────────┐  ┌─────────┴────────┐
    │            │       │ DETERMINE CURRENT   │  │ DETERMINE RECORDED│
    │            │       │ POSITION ACQUIRED FROM│ │ PAST POSITION AS  │
    │            │       │ GPS AS VEHICLE POSITION│ │ VEHICLE POSITION  │
    │            │       └─────────┬──────────┘  └─────────┬────────┘
    │            │                 │                       │
    │            └─────────────────┤◄──────────────────────┘
    │  ╭─S221                      │      ╭─S218
 ┌──┴──────────┐        ┌─────────┴──────────┐
 │ ENTER DESTINATION│    │ ENTER VEHICLE POSITION │
 │ FROM KEYWORD │        │ AS DESTINATION    │
 └──┬──────────┘        └─────────┬──────────┘
    │                             │
    └─────────────────────────────┤
                                  │
                        ( END OF PROCESS )
```

# FIG. 8

(A)

DEPARTURE POINT SELECTION PICTURE IMAGE

SELECT DEPARTURE POINT

CURRENT POINT (WITHIN A SHOP)
VEHICLE POSITION (B PARKING)

RETURN          END

(B)          ROUTE DISPLAY PICTURE IMAGE

VEHICLE POSITION          CURRENT POSITION

OK          NG

# FIG. 9

PORTABLE
TELEPHONE 2

ACQUISITION OF
CURRENT POSITION DATA — S311

ACQUISITION OF
PAST POSITION DATA — S312

CALCULATION OF
CURRENT VELOCITY — S313

S314
IS CURRENT
VELOCITY SUBJECT OF
JUDGING PROCESS?

NAVIGATION SERVER

PORTABLE
TELEPHONE

S315
DOES CURRENT
VELOCITY EXCEED PREDETERMINED
VELOCITY?

N

N

Y

MAKING PICTURE
IMAGE FOR
OPERATION INHIBITION — S316

RELEASE OF
OPERATION
INHIBITION — S319

DISPLAYING PICTURE
IMAGE FOR
OPERATION INHIBITION — S317

OPERATION INHIBITION
PROCESS — S318

END OF PROCESS

NAVIGATION
SERVER

S321
DOES CURRENT
VELOCITY EXCEED PREDETERMINED
VELOCITY?

Y

MAKING PICTURE
IMAGE FOR
OPERATION INHIBITION — S322

END OF PROCESS

# FIG. 10

(  START OF PROCESS  )

S411

IS IT START CHANCE OF POSITION CORRECTION PROCESS?  — N

Y

S412

EXIST IN POSITION CORRECTION INHIBITED SECTION?  — Y

N

POSITION MEASUREMENT SERVER

S413

WHICH IS SUBJECT OF CORRECTION CALCULATION?

PORTABLE TELEPHONE

S414

MAKE REQUEST TO MEASUREMENT SERVER FOR SUPPORT INFORMATION OF POSITION CORRECTION

S421

MAKE A REQUEST TO POSITION MEASUREMENT SERVER FOR POSITION CORRECTION CALCULATION

S415

POSITION CORRECTION CALCULATION AFTER RECEIVING SUPPORT INFORMATION FOR POSITION CORRECTION FROM MEASUREMENT SERVER

S422

RECEIVE CALCULATION RESULT OF POSITION CORRECTION FROM POSITION MEASUREMENT SERVER

S416

DISPLAY OF POSITION CORRECTION

S417

POST PROCESS OF POSITION CORRECTION

(  END OF PROCESS  )

# FIG. 11

```
   PORTABLE              NAVIGATION            POSITION
  TELEPHONE 2             SERVER             MEASUREMENT
                                               SERVER
```

BEFORE ROUTE GUIDANCE

S111
REQUEST FOR ROUTE SEARCH

S112
SEARCHING PROCESS FOR ROUTE

S151
REQUEST FOR VOICE DATA

S152
MAKING VOICE DATA

DURING ROUTE GUIDANCE

S121
UPDATE OF CURRENT POSITION

S122
GUIDANCE PROCESS AT GUIDANCE POINT

S123
OPERATION INHIBITION PROCESS DURING RUNNING

S131
IS POSITION CORRECTION PROCESS STARTED?  — N

Y  S132
REQUEST FOR POSITION CORRECTION

S133
POSITION CORRECTION PROCESS

S141
HAS DESTINATION BEEN REACHED?  — N

Y

END OF PROCESS        END OF PROCESS        END OF PROCESS

# FIG. 12

# FIG. 13

DISPLAY 2501

PORTABLE TELEPHONE 2

VEHICLE-MOUNTED 13
TERMINAL

VEHICLE
INFORMATION

INTRA-VEHICLE LAN 2504

# FIG. 14

VEHICLE-MOUNTED TERMINAL 13

( START )

2601
ACQUIRE VEHICLE VELOCITY DATA
AND/OR PARTING SIGNAL
FROM INTRA-VEHICLE LAN

2602
DOES VEHICLE STOP?          VEHICLE STOPS

2603
ACQUIRE CURRENT
POSITION OF VEHICLE

2604
TRANSMIT CURRENT
POSITION OF VEHICLE TO
PORTABLE TELEPHONE 2

PORTABLE TELEPHONE 2

( START )

( END )

2605
RECEIVE CURRENT POSITION
OF VEHICLE FROM INTRA-VEHICLE
COMMUNICATION PART 146

2606
STORE ACQUIRED CURRENT
POSITION OF VEHICLE

( END )

# FIG. 15

PORTABLE TELEPHONE 2

START

IS THERE CONNECTION TO
VEHICLE-MOUNTED TERMINAL 13 AND/OR REQUEST
FOR DATA TRANSMISSION? — 2701 — N

VEHICLE-MOUNTED
TERMINAL 13

START

RECEIVE FACILITY INFORMATION,
MAP DATA, ROUTE,
AND GUIDANCE DATA — 2703

TRANSMIT FACILITY INFORMATION,
MAP DATA, ROUTE, AND GUIDANCE DATA
FROM INTRA-VEHICLE COMMUNICATION
PART 146 TO VEHICLE-MOUNTED TERMINAL 13 — 2702

END

DISPLAY ENTIRE ROUTE MAP — 1506

NG

OK

END

DISPLAY MAP AROUND CURRENT
POSITION AND ROUTE — 2704

START GUIDANCE — 2705

END

## INTERNATIONAL SEARCH REPORT

| International application No. |
| --- |
| PCT/JP03/11130 |

**A. CLASSIFICATION OF SUBJECT MATTER**
Int.Cl$^7$ G01C21/26, G08G1/0969, H04B7/26, H04Q7/34

According to International Patent Classification (IPC) or to both national classification and IPC

**B. FIELDS SEARCHED**

Minimum documentation searched (classification system followed by classification symbols)
Int.Cl$^7$ G01C21/00-21/36, G08G1/00-9/02, H04B7/26, H04Q7/34

Documentation searched other than minimum documentation to the extent that such documents are included in the fields searched

| | | | |
| --- | --- | --- | --- |
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2000-161973 A (Equos Research Co., Ltd.), 16 June, 2000 (16.06.00), (Family: none) | 1-6 |
| A | JP 2002-107152 A (Kenwood Corp.), 10 April, 2002 (10.04.02), (Family: none) | 1-6 |
| A | JP 2001-033256 A (Fujitsu Ten Ltd.), 09 February, 2001 (09.02.01), (Family: none) | 1-6 |
| A | JP 2003-214877 A (Hitachi, Ltd.), 30 July, 2003 (30.07.03), (Family: none) | 1-6 |

☐ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family. |

| Date of the actual completion of the international search | Date of mailing of the international search report |
| --- | --- |
| 02 December, 2003 (02.12.03) | 16 December, 2003 (16.12.03) |

| Name and mailing address of the ISA/<br>    Japanese Patent Office | Authorized officer |
| --- | --- |
| Facsimile No. | Telephone No. |

Form PCT/ISA/210 (second sheet) (July 1998)